# FASCICULE DE BREVET EUROPEEN

(11) **EP 2 342 583 B1**
(45) Date de publication et mention de la délivrance du brevet: **23.10.2013**
(21) Numéro de dépôt: 09783338.8
(22) Date de dépôt: 23.09.2009
(51) Int. Cl.: G01S 13/76, G01S 13/78

(54) **PROCEDE D'IDENTIFICATION D'UN EQUIPEMENT AU SOL OU EN MER**
VERFAHREN ZUR ERKENNUNG EINER EINRICHTUNG AUF DEM BODEN ODER AUF SEE
METHOD FOR IDENTIFYING A FACILITY ON THE GROUND OR AT SEA

(30) Priorité: 23.09.2008 FR 0805221
(43) Date de publication de la demande: 13.07.2011
(73) Titulaire: THALES, 92200 Neuilly-sur-Seine (FR)
(72) Inventeur: SCHOENDORFF, Bertrand, F-35370 Etrelles (FR); PROVOST, Claude, F-53000 Laval (FR)
(74) Mandataire: Lucas, Laurent Jacques
(86) Numéro de dépôt international: PCT/EP2009/062333
(87) Numéro de publication internationale: WO 2010/034747

(56) Documents cités:
- EP-A- 1 189 073
- EP-A- 1 372 127
- JP-A- 62 011 307
- US-A- 3 375 516
- US-A- 3 981 009
- US-A- 4 143 369
- US-A- 5 712 628
- US-A- 5 867 535
- US-B1- 6 545 632

## Description

La présente invention concerne un procédé d'identification d'un équipement au sol. Elle s'applique notamment aux répondeurs aéroportés, pour identifier des postes placés au sol ou en mer ou pour vérifier la présence ou l'absence de troupes au sol à l'intérieur d'une zone déterminée

Lorsqu'un aéronef détecte la présence d'équipements au sol ou en mer, il est parfois souhaité d'identifier ces équipements dans un temps très court, de l'ordre par exemple, d'une seconde. Cette identification peut être facilitée lorsque lesdits équipements sont pourvus d'un transpondeur, lequel peut être sollicité par un message radioélectrique issu de l'aéronef. Pour éviter tout ajout de matériel embarqué, le répondeur situé dans l'aéronef peut être utilisé pour émettre un message d'interrogation vers les équipements détectés au sol.

Pour rappel, un répondeur aéroporté est un dispositif permettant d'identifier l'aéronef sur lequel il est placé. Lorsqu'un message d'interrogation au format standard est reçu par le répondeur, ce dernier répond en émettant un code propre à l'aéronef. Plus particulièrement, les répondeurs « ami ou ennemi », souvent désignés par l'acronyme anglo-saxon IFF pour « Identification Friend or Foe », sont adaptés à répondre, lorsqu'un message d'interrogation ami est reçu, par un code crypté indéchiffrable des troupes ennemies. En outre, le mode de fonctionnement d'un répondeur peut être inversé, le répondeur émettant un message sans avoir été préalablement sollicité par une interrogation. De cette manière, un aéronef peut, par exemple, signaler spontanément sa présence à des équipements situés au sol ou en mer. Dans le cas d'une utilisation militaire, un répondeur IFF fonctionnant en mode inverse peut, par exemple, émettre des messages d'interrogation avant de déclencher une attaque aérienne au sol, aux fins de s'assurer qu'aucune troupe amie n'est située sur la zone ciblée. L'aéronef équipé du répondeur guette alors une éventuelle réponse d'un équipement ami au sol.

Classiquement, un aéronef pourvu d'un répondeur comprend deux antennes d'émission reliées à ce répondeur, une première antenne, dite haute, étant placée au-dessus du fuselage, une seconde antenne, dite basse, étant placée sous le fuselage. En effet, la présence de deux antennes est notamment justifiée par le fait que lorsque, par exemple, l'aéronef effectue un virage, l'une des deux antennes peut être masquée vis-à-vis des équipements avec lesquels elle est susceptible de communiquer, l'autre antenne permettant alors d'établir un lien de communication. Généralement, le répondeur fonctionnant en mode inverse émet une série de messages, les messages étant émis alternativement sur l'antenne haute et sur l'antenne basse.

Toutefois, ce mode de fonctionnement engendre de nombreuses pertes de messages d'interrogation. En effet, lorsqu'une antenne parmi les deux est masquée, la moitié des messages de la série est perdue, c'est-à-dire non reçue par le sol. Cette perte est défavorable à une éventuelle identification air-sol, car elle réduit la probabilité de réception d'un message par un équipement au sol.

Une technique pour résoudre ce problème est d'augmenter le nombre de messages d'interrogation émis, autrement dit d'allonger dans le temps la série de messages émis, la densité des messages dans le temps étant standardisée et non modifiable. Cependant, cette solution conduit, d'une part, à un manque de discrétion et, d'autre part, à un dépassement de la durée acceptable pour effectuer une éventuelle identification.

Un but de l'invention est de maximiser la probabilité d'identification d'un équipement au sol ou en mer en limitant la perte de messages d'interrogation émis par un répondeur fonctionnant en mode inverse. A cet effet, l'invention a pour objet un procédé d'identification d'un équipement au sol ou en mer, le procédé étant mis en oeuvre sur un répondeur aéroporté relié à au moins deux antennes, le procédé comprenant une étape de choix d'une première antenne d'émission puis une étape d'émission d'au moins un message d'interrogation à partir de l'antenne choisie, le procédé étant caractérisé en ce qu'il comporte en outre, au moins les étapes suivantes :
■ tester si un signal de réponse au message d'interrogation a été reçu par le répondeur :
   ○ si au moins un signal de réponse est reçu par au moins une des antennes du répondeur, identifier le ou les signaux de réponse, et choisir une antenne d'émission en fonction desdits signaux de réponse reçus ;
   ○ si aucun signal de réponse n'est reçu, choisir une antenne d'émission différente de l'antenne ayant émis le dernier message d'interrogation ;
■ réitérer le procédé à partir de l'étape d'émission du message d'interrogation.

Selon un mode de mise en oeuvre du procédé selon l'invention, l'antenne d'émission choisie lorsque au moins un signal de réponse a été reçu par au moins une des antennes est, parmi lesdites antennes, celle qui a conduit, pour la majorité des signaux de réponse reçus, au meilleur bilan de liaison.

Selon un mode de mise en oeuvre du procédé selon l'invention, lors de chaque itération du procédé, une étape de test est exécutée pour décider si un message d'interrogation doit être encore émis ou non, de sorte que la série de messages d'interrogation est limitée dans le temps, notamment pour préserver la discrétion de l'aéronef vis-à-vis d'équipements hostiles.

Selon un mode de mise en oeuvre du procédé selon l'invention, l'arrêt de l'émission des messages d'interrogation est décidé par l'étape de test lorsqu'un nombre fixé N de messages a déjà été émis.

Selon un autre mode de mise en oeuvre du procédé selon l'invention, l'arrêt de l'émission des messages d'interrogation est déclenché par un signal d'horloge.

Selon un autre mode de mise en oeuvre du procédé selon l'invention, lorsqu'une antenne d'émission a été choisie après qu'au moins un signal de réponse a été reçu par au moins une des antennes du répondeur, alors l'antenne d'émission n'est plus changée jusqu'à émission du dernier message d'interrogation.

Le procédé d'identification selon l'invention peut être utilisé pour un répondeur IFF, les messages d'interrogations étant émis à partir dudit répondeur sur la fréquence dédiée aux émissions de réponses IFF, cette fréquence étant souvent égale à 1090 MHz. Le fait d'émettre un message d'interrogation sur la fréquence dédiée aux émissions de réponses à partir d'un répondeur IFF correspond à un mode de fonctionnement dit en « IFF inverse ».

L'invention a également pour objet un répondeur aéroporté et relié à au moins deux antennes, une première antenne étant placée au-dessus du fuselage de l'aéronef équipé du répondeur, la seconde antenne étant placée sous ledit fuselage, le répondeur mettant en oeuvre le procédé d'identification tel que décrit plus haut.

Selon un mode de réalisation, le répondeur est un répondeur IFF, les antennes reliées au dit répondeur étant adaptées à émettre un message d'interrogation sur la fréquence 1090 MHz.

D'autres caractéristiques apparaîtront à la lecture de la description détaillée donnée à titre d'exemple et non limitative qui suit faite en regard de dessins annexés qui représentent :
- la figure 1, un schéma illustrant les échanges de messages entre un répondeur aéroporté fonctionnant en mode inverse et un interrogateur au sol,
- la figure 2, un synoptique présentant les étapes d'un premier mode de mise en oeuvre du procédé selon l'invention,
- la figure 3, un synoptique présentant les étapes d'un deuxième mode de mise en oeuvre du procédé selon l'invention,
- la figure 4, un synoptique présentant les étapes d'un troisième mode de mise en oeuvre du procédé selon l'invention,
- la figure 5, un synoptique présentant les étapes d'un quatrième mode de mise en oeuvre du procédé selon l'invention.

Les mêmes références dans des figures différentes désignent les mêmes éléments.

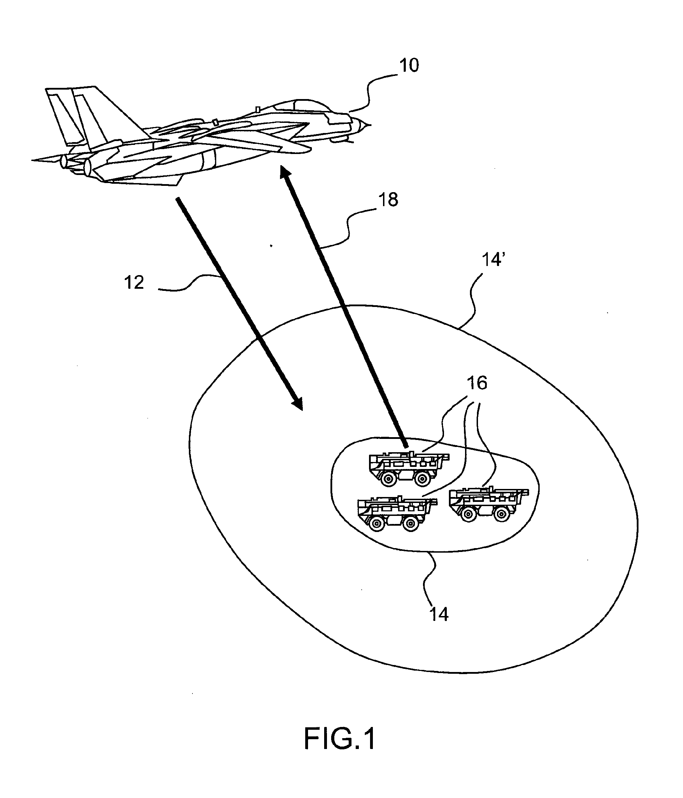

La figure 1 présente un schéma illustrant les échanges de messages entre un répondeur aéroporté fonctionnant en mode inverse et un interrogateur au sol.

Un répondeur placé sur un avion 10 et relié à deux antennes 21, 22 ayant une fonction d'émission/réception, émet via l'une des deux antennes 21, 22, un message d'interrogation 12. Dans l'exemple, le message est uniquement destiné à des équipements situés dans une zone d'intérêt 14 au sol, ladite zone d'intérêt 14 étant englobée par la zone 14' couverte par le rayonnement de l'antenne. La zone d'intérêt 14 est précisée dans le message d'interrogation, de sorte que lorsque des équipements, par exemple des véhicules 16 inclus dans la zone d'intérêt 14 reçoivent le message d'interrogation 12, ces équipements émettent en retour une réponse 18 comprenant par exemple un code d'identification ou leur position.

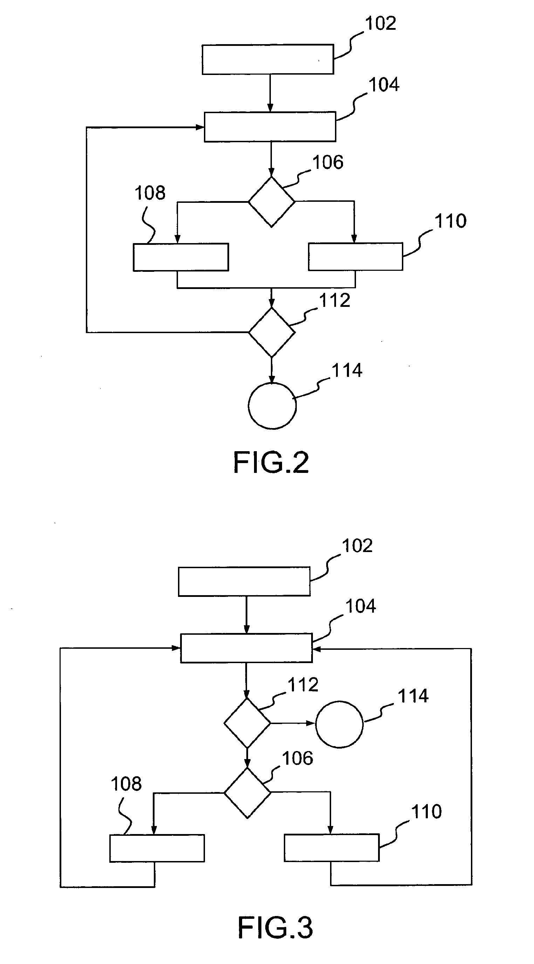

La figure 2 présente, à travers un synoptique, les étapes d'un premier mode de mise en oeuvre du procédé selon l'invention. Le procédé est mis en oeuvre sur un aéronef tel que celui présenté en figure 1 comportant un répondeur relié à au moins deux antennes.

Dans un premier temps 102, une antenne d'émission est choisie parmi les antennes 21, 22 de l'aéronef. L'antenne peut par exemple être choisie arbitrairement ou aléatoirement.

Dans un deuxième temps 104, le répondeur émet un message d'interrogation via l'antenne choisie précédemment. Par exemple, un répondeur IFF émet au cours de cette étape 104, un message sur la fréquence 1090 MHz, qui classiquement, est dédiée à l'émission d'une réponse à un message d'interrogation. Un test 106 est ensuite effectué pour déterminer si une ou plusieurs réponses ont été reçues par le répondeur.

Si le répondeur ne reçoit aucune réponse au message d'interrogation émis, alors une nouvelle antenne d'émission est choisie, différente de la dernière ayant émis un message ; cette étape est référencée 108 sur la figure 2.

Si, a contrario, le répondeur reçoit une ou plusieurs réponses au message d'interrogation émis, alors une nouvelle antenne d'émission est choisie en fonction des signaux des réponses reçus, étape référencée 110 sur la figure 2. Par exemple, si un seul signal de réponse est reçu, l'antenne d'émission choisie est celle pour laquelle le bilan de liaison obtenu est le meilleur vis-à-vis du signal de réponse reçu, c'est-à-dire le bilan de liaison entre l'antenne du sol et l'antenne du répondeur aéroporté. Si plusieurs signaux de réponses sont reçus - par exemple, plusieurs équipements présents dans la zone d'intérêt au sol répondent au message d'interrogation précédemment émis par le répondeur -, l'antenne d'émission est choisie en fonction de ces multiples signaux de réponses. Par exemple, pour chaque signal de réponse, les bilans de liaison sont comparés entre les différentes antennes reliées au répondeur et l'antenne d'émission choisie est celle pour laquelle les bilans de liaison obtenus sont majoritairement meilleurs qu'avec les autres antennes. A titre d'illustration, si un répondeur est relié à deux antennes, par exemple une antenne haute et une antenne basse, que cinq signaux de réponse ont été reçus et que pour trois d'entre eux le bilan de liaison est meilleur sur l'antenne basse, alors l'antenne basse sera choisie pour émettre le prochain message d'interrogation vers la zone d'intérêt. Autrement dit, l'antenne choisie est celle pour laquelle le bilan de liaison avec la zone d'intérêt était le meilleur. D'autres critères de choix d'antenne peuvent être considérés.

Contrairement à un procédé classique dans lequel une simple alternance entre les antennes d'émission est effectuée, la qualité du message de réponse capté par les antennes est prise en compte dans le procédé selon l'invention afin de déterminer l'antenne maximisant la probabilité d'atteindre des transpondeurs au sol. Par ailleurs, parallèlement à cette étape 110 de choix d'antenne, des traitements d'identification peuvent être effectués à partir de la réponse reçue, notamment pour s'assurer, dans un contexte militaire, que la réponse est issue d'un équipement ami.

Le fonctionnement en mode inversé (dans l'exemple, le répondeur IFF fonctionnant en mode inversé) implique plusieurs différences par rapport au fonctionnement classique d'un répondeur aéroporté, lequel répondrait à une interrogation venue du sol. Une première différence réside dans l'aspect temporel : dans un mode classique, la réponse émise par le répondeur aéroporté vers le sol est synchrone et consécutive à l'interrogation émise par l'équipement au sol tandis qu'en mode inversé, les interrogations ne sont pas synchrones des réponses en provenance du sol. Aussi, en mode inversé, il peut y avoir des écarts temporels relativement longs entre l'émission des réponses et l'émission des interrogations (quelques centaines de millisecondes, voire environ une seconde, par exemple) et la configuration de réception a pu évoluer dans cet intervalle. Une deuxième différence concerne la multiplicité des systèmes sol visés dans le cas du mode inversé, alors qu'un seul interrogateur au sol est concerné dans le mode classique. Une troisième différence concerne le caractère omni-directionnel des antennes au sol dans le cadre d'un fonctionnement en mode inversé, l'antenne de l'interrogateur au sol ayant un diagramme directif dans le cadre d'un fonctionnement en mode classique.

Ainsi, dans la plupart des applications en mode inversé, le choix intelligent de l'antenne doit permettre d'obtenir le meilleur bilan de liaison possible avec la zone d'intérêt visée, et non pas simplement avec un équipement unique.

Une fois la nouvelle antenne d'émission choisie, un test 112 est exécuté pour déterminer si un message d'interrogation doit être encore émis. En effet, un répondeur émet généralement une série limitée en nombre de messages, notamment lorsqu'on souhaite ne pas trop altérer la discrétion radioélectrique de l'aéronef. Aussi, dans l'exemple, le test 112 détermine si le nombre de messages émis est supérieur à un nombre N fixé à l'avance. Si le nombre de messages émis est inférieur ou égal à N, alors une nouvelle itération du procédé est exécutée à partir de l'étape 104 d'émission d'un message d'interrogation. Si plus de N messages ont déjà été émis, alors le procédé prend fin 114.

Selon un autre mode de mise en oeuvre du procédé d'identification selon l'invention, lorsqu'une réponse a été reçue par le répondeur, le test 112 décide de l'arrêt ou non du procédé selon la nature du message reçu dans la réponse. Par exemple, dans le cadre d'une utilisation de répondeurs IFF, si une réponse « amie » est reçue, alors le test 112 décide d'arrêter les émissions de messages d'interrogation.

L'ordre des étapes présentées dans le premier mode de mise en oeuvre en figure 2 n'est nullement limitatif, comme l'illustre par exemple la figure 3.

La figure 3 présente, à travers un synoptique, les étapes d'un deuxième mode de mise en oeuvre du procédé selon l'invention. Selon ce deuxième mode de mise en oeuvre, l'étape de test 112 décidant de la fin ou non du procédé est exécutée avant l'étape de test 106 déterminant si une réponse a été ou non reçue par le répondeur.

Ainsi, dans un premier temps 102, une antenne d'émission est choisie parmi les antennes de l'aéronef. Dans un deuxième temps 104, le répondeur émet un message d'interrogation via l'antenne choisie précédemment. Un test 112 est ensuite exécuté pour décider ou non de l'arrêt 114 du procédé. Si, à l'issue de ce test 112, l'exécution du procédé est poursuivie, un test 106 pour déterminer si une réponse a été reçue par le répondeur est exécuté. Si aucune réponse n'a été reçue, alors une antenne différente de la dernière antenne utilisée pour émettre un message est choisie 108. A contrario, si une réponse a été reçue par le répondeur, une étape 110 de choix d'une nouvelle antenne d'émission en fonction de la réponse reçue est exécutée, comme détaillée plus haut en figure 2. A l'issue des étapes précédentes 108, 110, l'antenne d'émission a été choisie et le procédé est réitéré à partir de l'étape 104 d'émission d'un message d'interrogation.

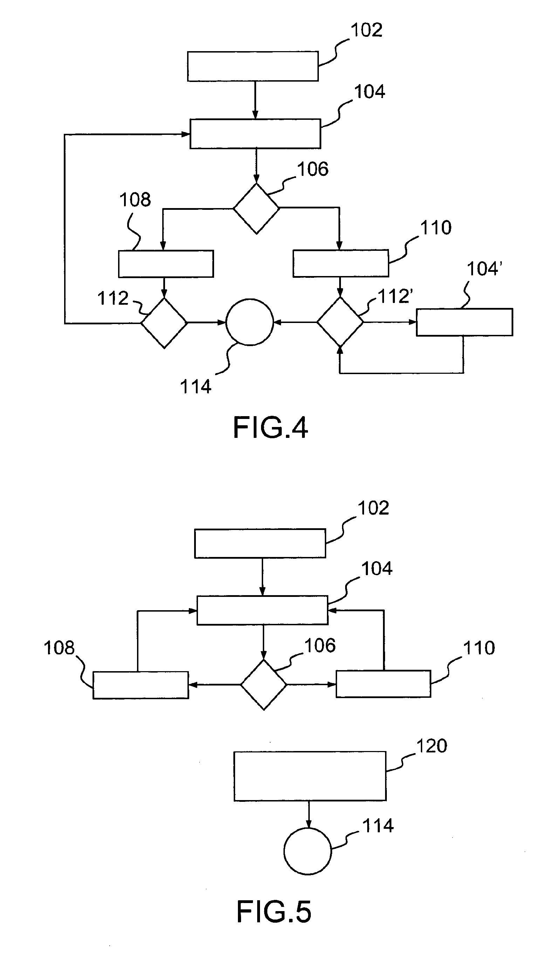

La figure 4 présente, à travers un synoptique, les étapes d'un troisième mode de mise en oeuvre du procédé selon l'invention. Selon ce troisième mode de mise en oeuvre, dès qu'une réponse a été reçue par le répondeur et qu'une nouvelle antenne d'émission a été sélectionnée 110, alors cette antenne demeure l'antenne d'émission jusqu'à l'émission du dernier message de la série.

Ainsi, le procédé de la figure 4 diffère de celui de la figure 2 en ce que lorsqu'une réponse a été reçue et que le test 112' décidant de l'arrêt ou non du procédé indique la continuation du procédé, alors une autre étape 104' d'émission d'un message d'interrogation est exécutée. A l'issue de cette étape d'émission 104', le procédé est réitéré à partir de l'étape de test 112' décidant de l'arrêt ou non du procédé, de sorte que l'antenne d'émission demeure la même pour toutes les itérations restantes. Cette mise en oeuvre peut notamment être choisie lorsque les conditions de bilan de liaison sont stables - la durée prévue d'émission de la série de messages d'interrogation est courte devant la durée de changement de configuration de l'aéronef - ; autrement dit, selon cette hypothèse si une antenne est masquée du sol à un instant donné, cette même antenne demeure alors probablement masquée du sol pendant la durée d'émission de la série de messages.

La figure 5 présente, à travers un synoptique, les étapes d'un quatrième mode de mise en oeuvre du procédé selon l'invention. Selon ce mode de mise en oeuvre, la condition d'arrêt du procédé dépend d'une horloge.

Ainsi, le procédé de la figure 4 diffère de celui de la figure 2 en ce qu'à l'issue des étapes 108, 110 de sélection de la nouvelle antenne d'émission, le procédé est réitéré directement à partir de l'étape 104 d'émission, tandis qu'en parallèle une horloge 120 signale la fin 114 du procédé lorsqu'une période fixée s'est écoulée.

Un avantage du procédé selon l'invention est qu'il ne nécessite aucune intervention matérielle lourde. En effet, une modification logicielle du répondeur embarqué suffit pour mettre en oeuvre l'algorithme sur un système existant.

## Revendications

1. Procédé d'identification d'un équipement au sol ou en mer, le procédé étant mis en oeuvre sur un répondeur aéroporté relié à au moins deux antennes (21, 22), le procédé comprenant une étape de choix d'une première antenne d'émission (102) puis une étape d'émission d'au moins un message d'interrogation à partir de l'antenne choisie (104), le procédé étant **caractérisé en ce qu'**il comporte en outre, au moins les étapes suivantes :
■ tester si un signal de réponse au message d'interrogation a été reçu par le répondeur (106) :
○ si au moins un signal de réponse est reçu par au moins une des antennes du répondeur, identifier le ou les signaux de réponse, et choisir une antenne d'émission en fonction desdits signaux de réponse reçus (110) ;
○ si aucun signal de réponse n'est reçu, choisir une antenne d'émission différente de l'antenne ayant émis le dernier message d'interrogation (108) ;
■ réitérer le procédé à partir de l'étape d'émission du ou des messages d'interrogation (104),
le procédé étant **caractérisé en ce que** lorsque au moins un signal de réponse a été reçu par au moins une des antennes du répondeur, l'antenne d'émission choisie est, parmi lesdites antennes, celle qui a conduit, pour la majorité des signaux de réponse reçus, au meilleur bilan de liaison.

2. Procédé d'identification selon la revendication 1, **caractérisé en ce que** lors de chaque itération du procédé, une étape de test (112) est exécutée pour décider si un message d'interrogation doit être encore émis ou non.

3. Procédé d'identification selon la revendication 2, **caractérisé en ce que** l'arrêt de l'émission des messages d'interrogation est décidé par l'étape de test (112) lorsqu'un nombre fixé N de messages a déjà été émis.

4. Procédé d'identification selon la revendication 1, **caractérisé en ce que** l'arrêt de l'émission des messages d'interrogation est déclenché par un signal d'horloge (120).

5. Procédé d'identification selon l'une des revendications précédentes, **caractérisé en ce que** lorsqu'une antenne d'émission a été choisie après qu'au moins un signal de réponse a été reçu par au moins une des antennes du répondeur, alors l'antenne d'émission n'est plus changée jusqu'à émission du dernier message d'interrogation.

6. Utilisation du procédé d'identification selon l'une des revendications précédentes pour un répondeur IFF, les messages d'interrogations étant émis à partir dudit répondeur sur la fréquence dédiée aux émissions de réponses IFF.

7. Utilisation, du procédé d'identification selon l'une des revendications précédentes pour un répondeur IFF, les messages d'interrogations étant émis à partir dudit répondeur sur la fréquence 1090 MHz.

8. Répondeur aéroporté et relié à au moins deux antennes (21, 22), une première antenne étant placée au-dessus du fuselage de l'aéronef équipé du répondeur, la seconde antenne étant placée sous ledit fuselage, le répondeur étant **caractérisé en ce qu'**il met en oeuvre le procédé d'identification selon l'une des revendications précédentes.

9. Répondeur IFF selon la revendication 8, les antennes (21, 22) reliées au répondeur étant adaptées à émettre un message d'interrogation sur la fréquence 1090 MHz.

## Patentansprüche

1. Verfahren zur Erkennung einer Einrichtung auf dem Boden oder auf See, wobei das Verfahren auf einem auf dem Luftweg transportierten Antwortgeber umgesetzt wird, der mit mindestens zwei Antennen (21, 22) verbunden ist, wobei das Verfahren einen Auswahlschritt einer ersten Sendeantenne (102), danach einen Sendeschritt mindestens einer Abfragenachricht ab der ausgewählten Antenne (104) umfasst, wobei das Verfahren **dadurch gekennzeichnet ist, dass** es ferner mindestens die folgenden Schritte aufweist:
Test, ob ein Antwortsignal auf die Abfragenachricht vom Antwortgeber (106) empfangen wurde:
wenn mindestens ein Antwortsignal von mindestens einer der Antennen des Antwortgebers empfangen wird, Identifizierung des oder der Antwortsignale und Auswahl einer Sendeantenne in Abhängigkeit der empfangenen Antwortsignale (110),
wenn kein Antwortsignal empfangen wurde, Auswahl einer Sendeantenne, die sich von der Antenne unterscheidet, die die letzte Abfragenachricht (108) gesendet hat,
Wiederholung des Verfahrens ab dem Sendeschritt der Abfragenachricht(en) (104),
wobei das Verfahren **dadurch gekennzeichnet ist, dass**, wenn mindestens ein Antwortsignal von mindestens einer der Antennen des Antwortgebers empfangen wurde, die unter den Antennen ausgewählte Sendeantenne diejenige ist, die für die Mehrheit der empfangenen Antwortsignale zur besten Verbindungsbilanz geführt hat.

2. Erkennungsverfahren nach Anspruch 1, **dadurch gekennzeichnet, dass** bei jeder Wiederholung des Verfahrens ein Testschritt (112) durchgeführt wird, um zu entscheiden, ob noch eine Abfragenachricht gesendet werden muss oder nicht.

3. Erkennungsverfahren nach Anspruch 2, **dadurch gekennzeichnet, dass** der Stopp des Sendens der Abfragenachrichten vom Testschritt (112) beschlossen wird, wenn bereits eine festgelegte Anzahl N von Nachrichten gesendet wurde.

4. Erkennungsverfahren nach Anspruch 1, **dadurch gekennzeichnet, dass** der Stopp des Sendens der Abfragenachrichten von einem Zeitsignal (120) ausgelöst wird.

5. Erkennungsverfahren nach einem der vorangehenden Ansprüche, **dadurch gekennzeichnet, dass**, wenn eine Sendeantenne ausgewählt wurde, nachdem mindestens ein Antwortsignal von mindestens einer der Antennen des Antwortgebers empfangen wurde, dann die Sendeantenne bis zur Sendung der letzten Abfragenachricht nicht mehr gewechselt wird.

6. Verwendung des Erkennungsverfahrens nach einem der vorangehenden Ansprüche für einen IFF-Antwortgeber, wobei die Abfragenachrichten von dem Antwortgeber auf der Frequenz gesendet werden, die auf Sendungen von IFF-Antworten spezialisiert ist.

7. Verwendung des Erkennungsverfahrens nach einem der vorangehenden Ansprüche für einen IFF-Antwortgeber, wobei die Abfragenachrichten von dem Antwortgeber auf der Frequenz 1090 MHz gesendet werden.

8. Auf dem Luftweg transportierter und mit mindestens zwei Antennen (21, 22) verbundener Antwortgeber, wobei eine erste Antenne über dem Rumpf des mit dem Antwortgeber ausgestatteten Luftfahrzeugs platziert ist, wobei die zweite Antenne unter dem Rumpf platziert ist, wobei der Antwortgeber **dadurch gekennzeichnet ist, dass** er das Erkennungsverfahren nach einem der vorangehenden Ansprüche umsetzt.

9. IFF-Antwortgeber nach Anspruch 8, wobei die mit dem Antwortgeber verbundenen Antennen (21, 22) angepasst sind, um eine Abfragenachricht auf der Frequenz 1090 MHz zu senden.

## Claims

1. A method for identifying an item of equipment on the ground or at sea, said method being implemented on an airborne responder linked to at least two antennae (21, 22), said method comprising a step of selecting a first transmission antenna (102) and then a step of transmitting at least one interrogation message from the selected antenna (104), said method being **characterised in that** it further comprises at least the following steps:
testing whether a response signal to the interrogation message has been received by the responder (106):
identifying, if at least one response signal is received by at least one of the antennae of said responder, the one or more response signals and selecting a transmission antenna as a function of said received response signals (110);
selecting, if no response signal is received, a different transmission antenna from the antenna that transmitted the last interrogation message (108);
repeating the method from the step of transmitting the one or more interrogation messages (104),
said method being **characterised in that** when at least one response signal has been received by at least one of the antennae of said responder, the selected transmission antenna is, from among said antennae, that which has led to the best link budget for most of the response signals received.

2. The identification method according to claim 1, **characterised in that** each time said method is repeated a test step (112) is executed to decide whether or not an interrogation message has to be transmitted.

3. The identification method according to claim 2, **characterised in that** the decision to stop the transmission of interrogation messages is taken during the test step (112) when a fixed number N of messages has already been transmitted.

4. The identification method according to claim 1, **characterised in that** stopping the transmission of the interrogation messages is triggered by a clock signal (120).

5. The identification method according to any one of the preceding claims, **characterised in that** when a transmission antenna has been selected after at least one response signal has been received by at least one of the antennae of said responder, then the transmission antenna is no longer changed until the last interrogation message is transmitted.

6. The use of the identification method according to any one of the preceding claims for an IFF responder, the interrogation messages being transmitted from said responder on the frequency dedicated to transmissions of IFF responses.

7. The use of the identification method according to any one of the preceding claims for an IFF responder, the interrogation messages being transmitted from said responder on the 1090 MHz frequency.

8. An airborne responder linked to at least two antennae (21, 22), a first antenna being placed on top of the fuselage of the aircraft provided with said responder, the second antenna being placed underneath said fuselage, said responder being **characterised in that** it implements the identification method according to any one of the preceding claims.

9. The IFF responder according to claim 8, said antennae (21, 22) linked to said responder being designed to transmit an interrogation message on the 1090 MHz frequency.
